# EUROPEAN PATENT APPLICATION

(11) **EP 3 217 706 A1**
(43) Date of publication of application: **13.09.2017**
(21) Application number: 16203997.8
(22) Date of filing: 14.12.2016
(51) Int. Cl.: H04W 16/32, H04W 24/02, H04W 88/08, H04W 16/16

(54) **SERVER AND BASE STATION OF A RADIO NETWORK, METHOD OF ACCESSING A RADIO NETWORK, AND NON-TRANSITORY COMPUTER-READABLE STORAGE MEDIUM THEREOF**

(30) Priority: 09.03.2016 US 201662305539 P; 05.07.2016 TW 105121179
(71) Applicant: Industrial Technology Research Institute, Hsinchu 31040 (TW)
(72) Inventor: Liu, Chia-Lung, Hsinchu County 302 (TW); Hsu, Fu-Te, Taoyuan City 337 (TW)
(74) Representative: Becker Kurig Straus

(57) **Abstract**

The disclosure is directed to a method of accessing a radio network, a server and a base station of a radio access network, and a non-transitory computer-readable storage medium thereof. In an embodiment, the method includes the following steps: initializing one or more base stations, transmitting the information of a control function to the server, transmitting commands with control parameter configuration to the one or more base stations. The one or more base stations separate the control function and data function for communication protocols.

## Description

### TECHNICAL FIELD

The present application relates to a server and a base station of a radio network, a method of accessing a radio network, and non-transitory computer-readable storage medium.

### BACKGROUND

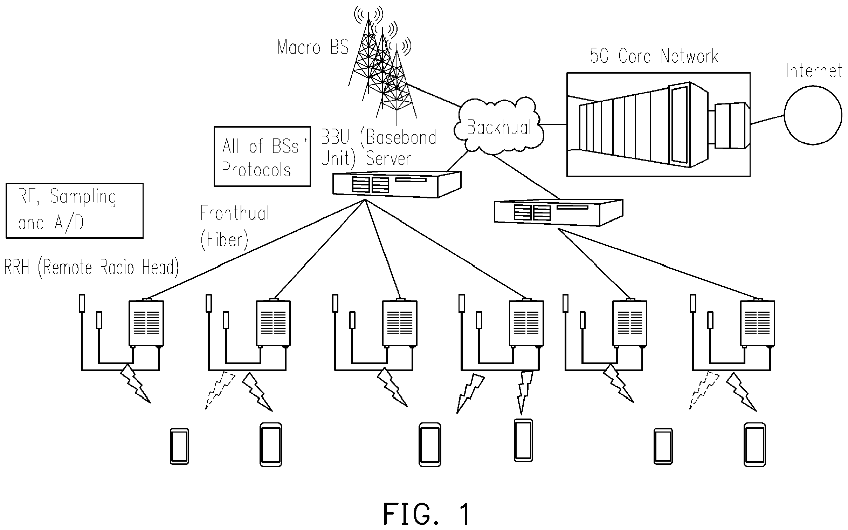

The whole world is engaged to promote next generation 5G (5th generation mobile networks or 5th generation wireless systems). Facing the challenge of rapid increasing wireless data amount, the telecom providers build a large number of small cells, for example, Ultra Dense Network (UDN), to provide the transmission requirements of users. The main problem of the UDN is the interference (management) via coordination. The telecom providers provide Centralized Cloud Radon Access Network (Cloud-RAN or C-RAN) to manage the coordination among small cell. Please refer Figure1. A typical radio network is shown in Figure 1, in this architecture, the front-end has Remote Radio Heads (RRH) and a RRH antenna and for simple analog and digital signal conversion. A RRH is connected to the rear end consisting of a Base Band Unit (BBU) and a 5G core network. The received signals are transmitted to the base band unit, and handle any interference among the small cell coverages of the user equipment, for instance mobile phones, and the resources are effective sharing used to reduce cost.

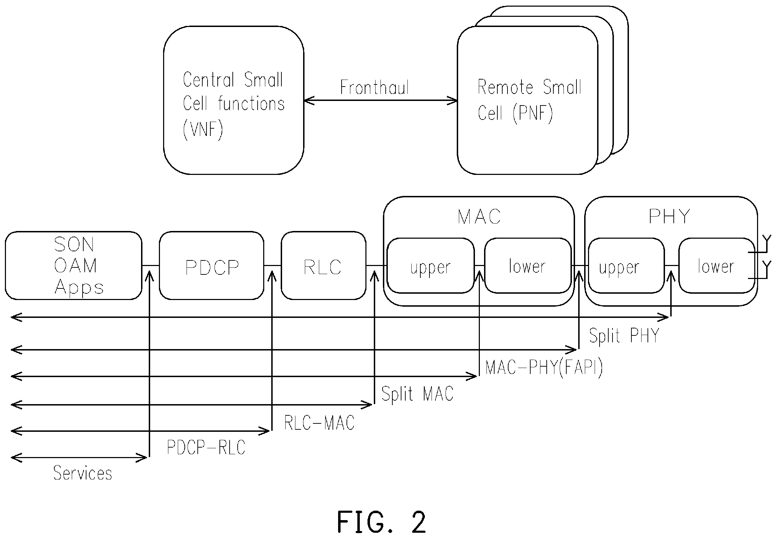

Owing to fronthaul with analog to digital converter (ADC) is between RRH and server with BBU, the requirements of transmission speed grow ten times. In order to decrease the transmission requirements, the ideas are proposed to move part pf the functions of protocol layers to RRH and then retransmit to the server with BBU, for example, in Figure 2, small cell function splits are proposed by Small Cell Forum. If more functions of protocol layers were in RRH, then less transmission requirements need to be transmitted to the server with BBU. But, loose coordination would lower the system performance owing to the interference among multiple RRHs, i.e., antenna/base station.

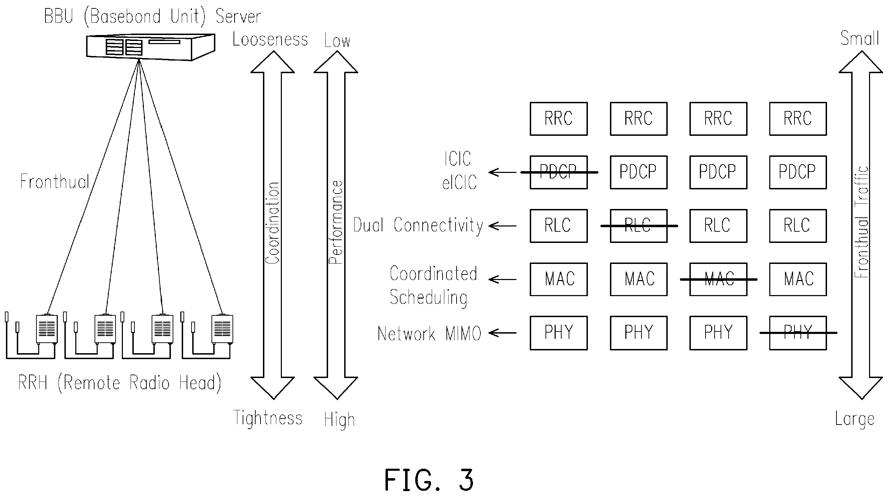

Currently, solutions for the high transmission requirements of front-end in centralized C-RAN are separate protocol layers, for example, part of protocol layers are in RRH, base station or small cell, and the other part pf protocol layers are in server with BBU. Loose coordination would lower the system performance owing to the interference between antenna and base stations and influence the connection requirements for front-end. Fig. 3 is a diagram illustrating the tradeoff between coordination and fronthaul traffic requirements, according to an exemplary embodiment.

### SUMMARY

One exemplary embodiment of the present disclosure relates to a server in a radio network. A server in a radio network includes: a control determination module to initialize one or more base stations; and a control information module to collect the information of a control function from one or more base stations, and the control determination module gives commands with control parameter configuration to the one or more base stations; wherein the one or more base stations separate the control function and a data function for communication protocols.

Another exemplary embodiment of the present disclosure relates to a base station in a radio network. A base station in a radio network includes: an executor gets initialization actions from a server; and a control information report transmits information of control functions to the server; wherein the base station separates the control function and data function for communication protocols.

Yet another exemplary embodiment of the present disclosure relates to a method for accessing a radio network. A method for accessing a radio network includes: initializing one or more base stations; transmitting the information of a control function to a server; and transmitting commands of control parameter configuration to the one or more base stations; wherein the one or more base stations separate the control function and data function for communication protocols.

One more exemplary embodiment of the present disclosure relates to a non-transitory computer-readable storage medium. A non-transitory computer-readable storage medium embodying a computer program product, the computer program product comprising instructions configured to cause a computing device to perform the above method.

The foregoing will become better understood from a careful reading of a detailed description provided herein below with appropriate reference to the accompanying drawings.

### BRIEF DESCRIPTION OF THE DRAWINGS

Fig. 1 is a block diagram illustrating a typical radio network, according to an exemplary embodiment.
Fig. 2 is a block diagram illustrating small cell function splits are proposed by Small Cell Forum, according to an exemplary embodiment.
Fig. 3 is a diagram illustrating the tradeoff between coordination and fronthaul traffic requirements, according to an exemplary embodiment.
Fig. 4-1 is a diagram illustrating the Long Term Evolution (LTE) communications protocol stack, according to an exemplary embodiment.
Fig. 4-2 is a diagram illustrating the WiFi communications protocol stack, according to an exemplary embodiment.
Fig. 5 is a diagram illustrating separation of data and control function, according to an exemplary embodiment.
Fig. 6 is a diagram illustrating the operations between the server and the base station, according to an exemplary embodiment.
Fig. 7 is a diagram illustrating the operations of the server, according to one exemplary embodiment.
Fig. 8 is a diagram illustrating the operations of the base station, according to one exemplary embodiment.
Fig. 9 is a diagram illustrating the detail operations of the base station, according to one exemplary embodiment.
Fig. 10 is a diagram illustrating the detail operations of the server, according to one exemplary embodiment.
Fig. 11 is a diagram illustrating the performance comparison with current technique, according to some exemplary embodiments.
Fig. 12 is a diagram illustrating the computation details, according to one exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

Our disclosure provides a network similar to a software defined network to separate control function and data function in centralized Cloud Radio Access Network (C-RAN). Control function might be executed in a server in Base Band Unit (BBU), radio network, C-RAN, the server in Ultra dense Network (UDN) or the server with BBU - those are the server in this disclosure. Data function might be executed in Base Station, a micro cell, a Small Cell, a Pico Cell, Evolved NodeB (eNB) or Remote Radio Head (RRH) - those are the base station in this disclosure. Fronthaul doesn't need to transmit a huge amount of data in our disclosure, but also could utilize Tight Coordination, for example, Network Multi-input Multi-output (Network MIMO) could be used to reduce interference and to increase the system performance. Base stations might exchange data mutually.

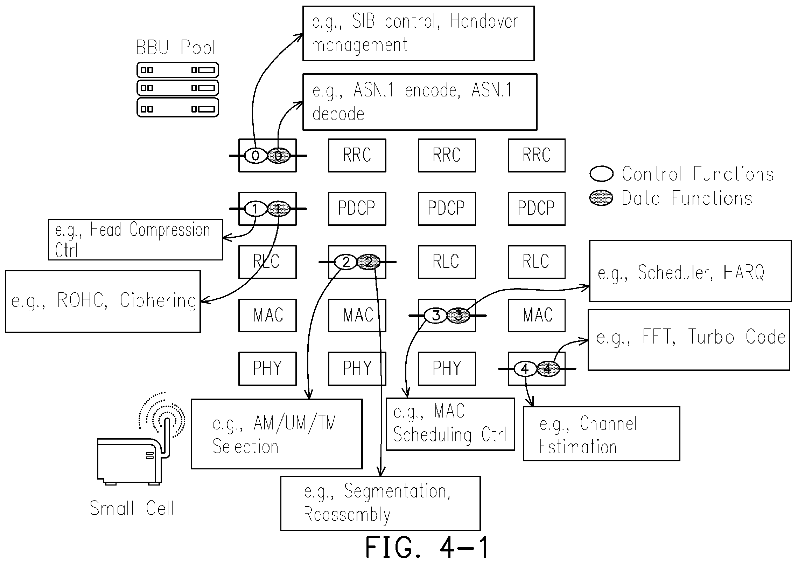

The Long Term Evolution (LTE) communications protocol stack is shown in Figure 4-1, consisting of five layers, from bottom to top, the Physical Layer (PHY), the Media Access Control (MAC) layer, the Radio Link Control (RLC) layer, the Packet Data Convergence Protocol (PDCP) layer, and the Radio Resource Control (RRC) layer. In each layer, a blank circle represents control information, and a dark circle represents data information. In the preferred embodiment of the present invention, control information and data information are separately processed in each layer. In other embodiments, the separation of control and data information might be processed in predetermined layers only, singly or multiply.

For examples of the control and data function separation, in the Physical Layer (PHY), the control information is Channel Estimation, and the data is a Fast Fourier Transform (FFT) and Turbo Code. In the Media Access Control (MAC) layer, the control information is the Scheduling, the data is the Hybrid Automatic Retransmission Request (HARQ) and Scheduler. In the Radio Link Control (RLC) layer, the control information includes the Transparent Mode (TM), Unacknowledged Mode (UM), and Acknowledged Mode (AM), and the data information is the Segmentation and Reassembly information. In the Packet Data Convergence Protocol (PDCP) layer, the control information is a Header Compression Control and the data information is a Robust Header Compression (ROHC) and Ciphering. In the Radio Resource Control (RRC), the control information is a Handover Management and System Information Block (SIB) and the data information is the Abstract Syntax Notation One (ASN.1).

The present invention discloses a communication system having a base station and a server wherein control functions are executed in the server and data functions are executed in the base station. Such separate executions will decrease the fronthaul traffic of the communication system. In the preferred embodiment of the present invention, the separate executions are performed on a LTE protocol stack. The separate executions can be performed wholly or individually on the LTE protocol stack, with a preferred embodiment performing the separations on all the layers of the LTE protocol stack. Another embodiment discloses the separate executions performed on one or more of the layers of the LTE protocol stack.

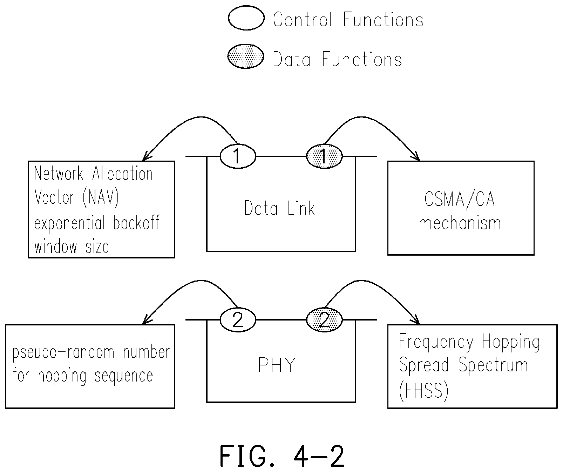

The WiFi communications protocol stack is shown in Figure 4-2, two layers for example, from bottom to top, the Physical Layer (PHY) and the Data Link Layer. In each layer, a blank circle represents control information, and a dark circle represents data information. In the preferred embodiment of the present invention, control information and data information are separately processed in each layer. In other embodiments, the separation of control and data information can be processed singly or in a plurality of predetermined layers.

For examples of the control and data function separation, in the Physical Layer (PHY), the control information is Pseudo-Random Number for Hopping Sequence, and the data is a Frequency-Hopping Spread Spectrum (FHSS). In the Data Link layer, the control information is the Network Allocation Vector (NAV) or Exponential Backoff Window Size, the data information is the Carrier Sense Multiple Access with Collision Avoidance (CSMA/CA).

In another embodiment of the present invention, the separate executions of control and data are performed on a WiFi protocol stack. In this embodiment, the separate executions are performed on at least one of the layers of the WiFi protocol stack, and in another embodiment the separate executions are performed on all the layers of the WiFi protocol stack.

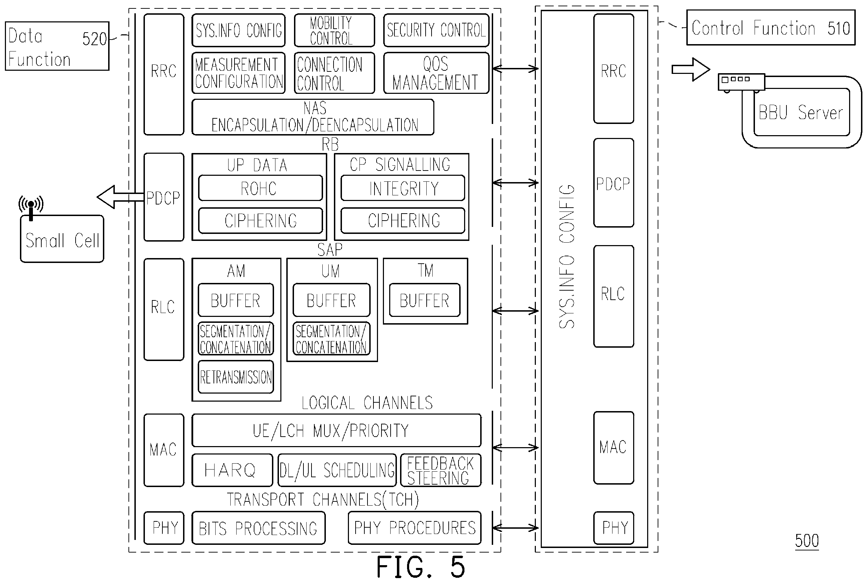

In our disclosure, the control and data separation might be arbitrary, for example, only in the physical layer, in the physical layer and media access layer, or in all of the protocol layers. Figure 5 is the separation example for LTE. Block 510 and 520 represent control function and data function respectively. The interface between server and control function 510 is BC (not illustrated in Figure 5). Control function 510 transmits control information by control logic interface SC (not illustrated in Figure 5) Data function 520 transmits data information by data logic interface BD (not illustrated in Figure 5). Control functions are handled by server, and base stations handle the data and control function separation. Control function 510 and data function 520 are saved in non-transitory computer-readable storage medium.

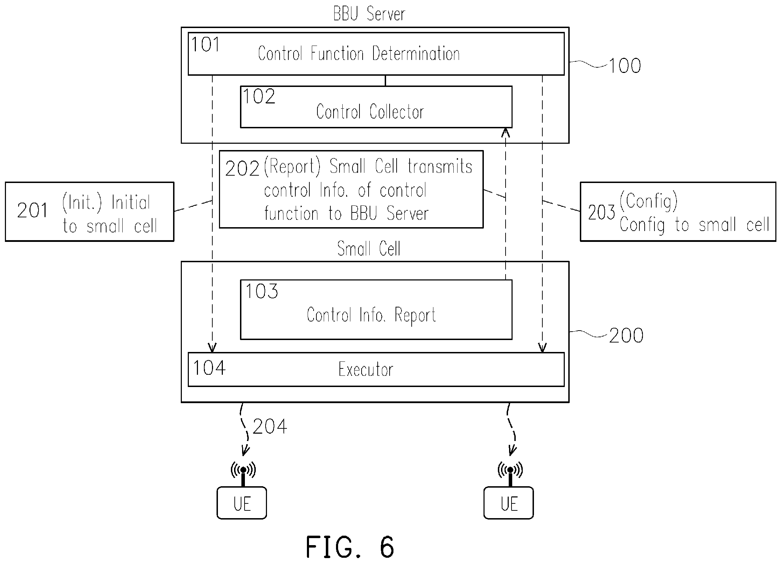

Figure 6 illustrates one embodiment of the present invention, for example, the block operation functions between base station and server. The server includes a control function determination 101, and a control information collector 102. The server handles the control functions. The control function determination 101, and the control information collector 102 could be saved in non-transitory computer-readable storage medium. Base station includes a control information report 103 and an executor 104. Base Station could separate control and data functions. The server could use a control logic interface to communicate control information to the control logic interface in base station. The data logic interface in the base station could communicate data information to the other base stations by their data logic interface.

In one embodiment of our disclosure, the control functions of one or multiple protocol layers in a plurality of base stations are extracted to form a tightly centralized C-RAN, for example, the Inter-cell Interference coordination, or two base stations serving one cell phone (network MIMO), Two base stations could be three base stations or any combinations of base stations.

The operations between the server and the base station are illustrated in Figure 6. In step 201, the server might initialize one or more base stations. In step 202, the one or more base stations might transmit control information to the server. In step 203, the server gives commands with control parameter configurations to the one or more base stations.

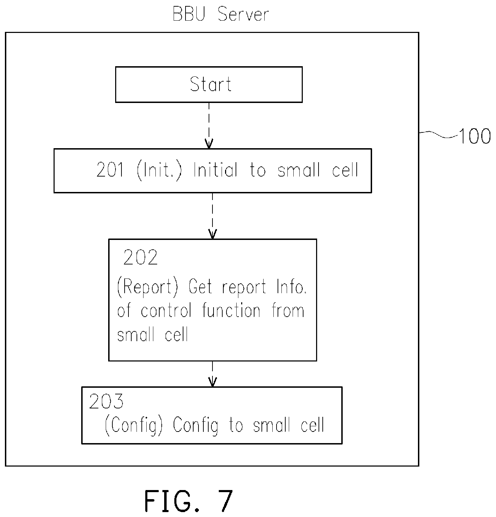

Figure 7 illustrates one embodiment of our disclosure with the operations of the server. Step 201 might be executed by the control function determination 101 to initialize one or more base stations. In step 202, the control information collector 102 in server might collect the control information from the control information report 103 in the base station. In step 203, the control function determination 101 in the server according to the control information from step 202 gives commands with control parameter configurations to the executor 104 of one or a plurality of base stations.

In one embodiment of our disclosure, the server calculates a relationship according to neighbor's relationship among a plurality of the base stations and transmits a calculating result to the base station. Network MIMO could be used to reduce interference via tight coordination and the system performance might be improved. The relationship might be executed by the channel information (control information) from the base station with the interference among base stations or the relations among a plurality of base stations and transmit to the base station.

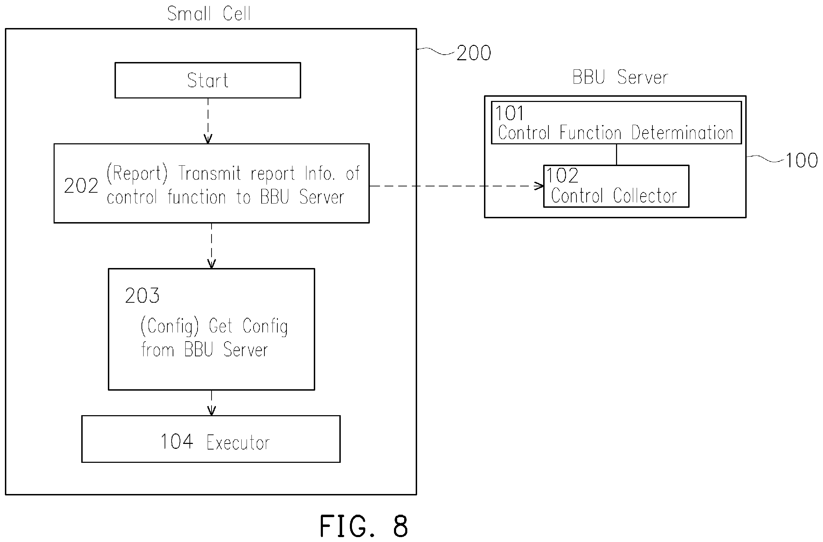

Figure 8 illustrates one embodiment of our disclosure with the operations of the base stations. The executor 104 in the base station gets initialization actions from the server. In step 202, the control information report 103 in the base station transmits control information to the control information collector 102 in server. In step 203, the executor 104 of one or more base stations gets the commands with control parameter and executes the commands.

In some embodiments of our disclosure, the server might connect with a plurality of base station with same structure in Figure 8. Non-transitory computer-readable storage medium might be saved in computer program products, for example, the server or the base station in our disclosure. The computer program products include instructions which are configured to execute the operations of Figure 8.

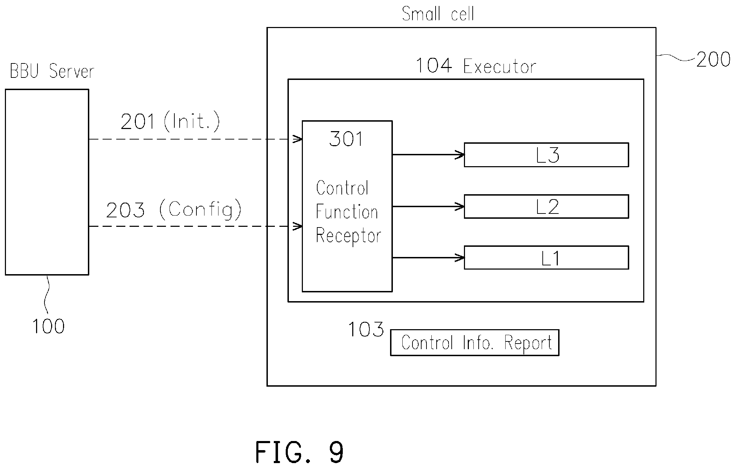

The following might use LTE as one embodiment of the present disclosure. The present disclosure is not limited to LTE. The present disclosure might be used to WiMAX and the other protocols. According to figure 9, the control information report 103 of the base station will vertically transmit the control parameter configuration of control function of the Physical layer, the Media Control Access layer, the Radio Link Control layer, the Packet Data Convergence Protocol (PDCP) layer, or the Radio Resource Control (RRC) layer to the server. Examples of such control signals are Channel Estimation, Scheduling, the Transparent Mode (TM), Unacknowledged Mode (UM), and Acknowledged Mode (AM). The control receptor 301 receives commands with control parameter configuration from the server. The control receptor 301 determines a layer of the communication protocols according to the commands with control parameter configuration, and transmits the commands with control parameter configuration to the layer of the communication protocols

The control function collector 102 in the server might collect the information related to control function and send to the control function determination 101. The control function determination 101 might estimate the performance and give commands with the control parameter configuration to the base stations. For example, performance estimation might be the maximum transmission traffic among the server, the base station and the user according to the MIMO parameter of the base station. Another example is the minimum energy among the server, the base station and the user according to the power parameter of the base station. The performance estimation might be a weight of a plurality parameters.

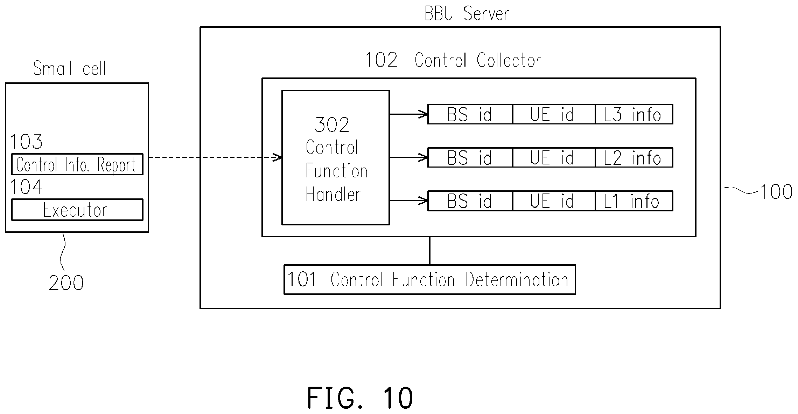

In Figure 10, the control function collector 102 in the server includes a control function handler 302. According to the User Identifier (UEid) and Base Station Identifier (BSid), the control function handler 302 might determine the control information to the user or to the base station.

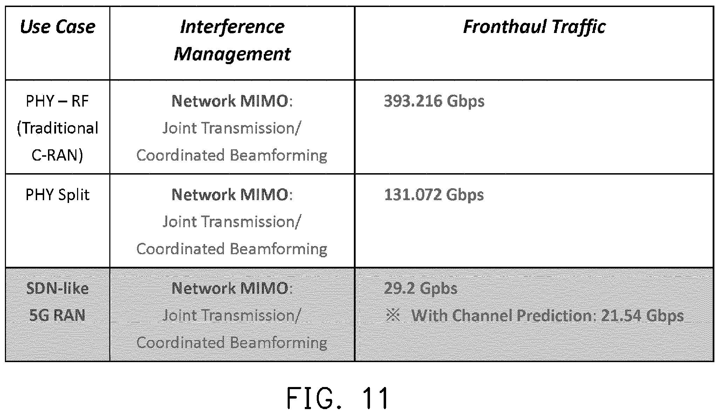

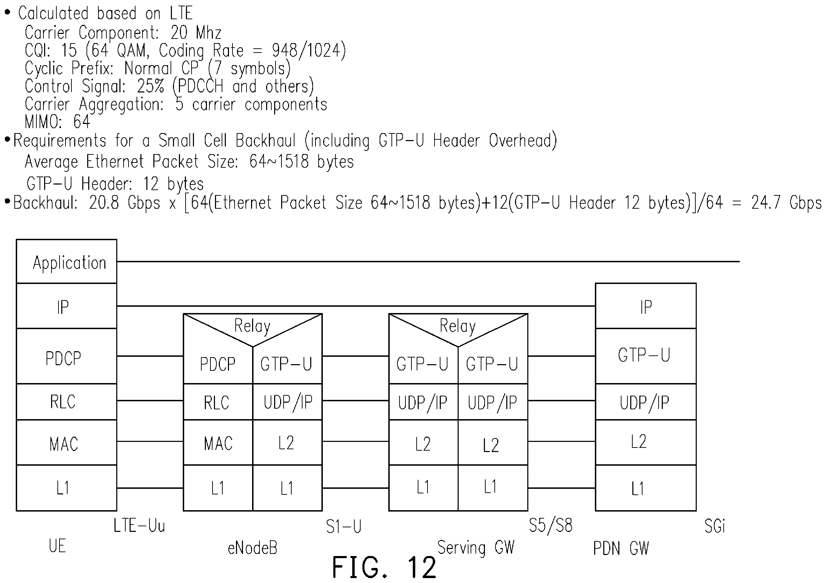

The performance comparison with current technique might be illustrated in Figure 11. According to Figure 11, the present disclosure might reduce the transmission traffic of the front-end greatly and still able to execute the tight coordination, for example, Network MIMO. Figure 12 illustrates the computation details.

In the present disclosure, LTE is used for one embodiment. The concept of the present disclosure might be used to the other protocols, for example, IEEE 802.11, IEEE 802.16, WiMAX or the other protocols.

## Claims

1. A server (100) in a radio network, **characterised by** comprising:
a control determination module (101) to initialize one or more base stations (200); and
a control information module (102) to collect the information of a control function (510) from one or more base stations (200), and the control determination module (101) give commands with control parameter configuration to the one or more base stations (200);
wherein the one or more base stations (200) separate the control function (510) and a data function (520) for communication protocols.

2. The server of claim 1, wherein the server (100) connects a plurality of the base stations (200).

3. The server of claim 1, wherein the server (100) is a server in the radio network, cloud radio access network or Ultra Dense Network, or a server with a base band unit.

4. The server of claim 1, wherein the base station (200) is a remote radio head, a base station, a small cell, a micro cell, a picro cell or evoluted Node base station (eNB).

5. The server of claim 1, wherein the server (100) calculates a relationship according to neighbor's relationship among a plurality of the base stations (200) and transmits a calculating result to the base station (200).

6. The server of claim 1, wherein the server (100) comprises a control logic interface (SC).

7. The server of claim 6, wherein the control logic interface of the server (100) communicates with a control logic interface of the base station (200).

8. A base station (200) in a radio network, **characterised by** comprising:
an executor (104) gets initialization actions from a server (100); and
a control information report (103) transmits information of control functions (510) to the server (100);
wherein the base station (200) separates the control function (510) and data function (520) for communication protocols.

9. The base station of claim 8, wherein the executor (104) comprises a control receptor (301).

10. The base station of claim 9, wherein the control receptor (301) receives commands with control parameter configuration from the server (100).

11. The base station of claim 10, wherein the control receptor (104) determines a layer of the communication protocols according to the commands with control parameter configuration, and transmits the commands with control parameter configuration to the layer of the communication protocols.

12. The base station of claim 8, wherein the server (100) connects a plurality of the base stations (200).

13. The base station of claim 8, wherein the base station (200) comprises a control logic interface.

14. The base station of claim 13, wherein the control logic interface of the base station (200) communicates with a control logic interface of the server (100).

15. The base station of claim 8, wherein the base station (200) comprises a data logic interface.

16. The base station of claim 15, wherein the data logic interface of the base station (200) communicates with the data logic interface of the other base station (200).

17. The base station of claim 8, wherein separation of the control function (510) and the data function (520) are performed on layers of the communication protocol vertically, whereby the control function (510) and data function (520) are separately processed, thereby achieving a vertical transmission channel.

18. The base station of claim 8 wherein separation of the control function (510) and the data function (520) performed on at least one of the layers of communication protocol.

19. A method for accessing a radio network, **characterised by** comprising:
initializing one or more base stations (200);
transmitting the information of a control function (510) to a server (100); and
transmitting commands of control parameter configuration to the one or more base stations (200);
wherein the one or more base stations (200) separate the control function (510) and data function (520) for communication protocols.

20. The method of claim 19, wherein the server (100) connects a plurality of the base stations (200).

21. The method of claim 19, wherein the server (100) calculates a relationship according to neighbor's relationship among the plurality of the base stations (200) and transmits a calculating result to the base station (200).

22. The method of claim 19, wherein the base station (200) determines a layer of the communication protocols according to the commands with control parameter configuration, and transmits the commands with control parameter configuration to the layer of the communication protocols.

23. The method of claim 19, wherein the base station (200) comprises a control logic interface, and the control logic interface communicates with a control logic interface of the server (100).

24. The method of claim 19, wherein the base station (200) comprises a data logic interface, and the data logic interface communicates with the data logic interface of the other base station (200).

25. The method of claim 19 wherein separation of the control function (510) and the data function (520) are performed on layers of the communication protocol vertically, whereby the control function (510) and data function (520) are separately processed, thereby achieving a vertical transmission channel.

26. The method of claim 19 wherein separation of the control function (510) and the data function (520) performed on at least one of the layers of communication protocol.

27. A non-transitory computer-readable storage medium embodying a computer program product, **characterised by** comprising the computer program product comprising instructions configured to cause a computing device to perform a method comprising:
initializing one or more base stations (200);
transmitting the information of a control function (510) to the server (100); and
transmitting commands of control parameter configuration to the one or more base stations (200);
wherein the one or more base stations (200) separate the control function (510) and data function (520) for communication protocols.

28. The non-transitory computer-readable storage medium of claim 27, wherein the base station (200) determines the layer of the communication protocols according to the commands with control parameter configuration, and transmits the commands with control parameter configuration to the layer of the communication protocols.
